# EUROPEAN PATENT SPECIFICATION

(11) **EP 3 907 743 B1**
(45) Date of publication and mention of the grant of the patent: **15.03.2023**
(21) Application number: 20911302.6
(22) Date of filing: 13.11.2020
(51) Int. Cl.: G21D 3/06, G21C 15/18

(54) **PASSIVE PULSE COOLING METHOD AND SYSTEM FOR NUCLEAR POWER PLANT**
PASSIVES IMPULSKÜHLVERFAHREN UND SYSTEM FÜR EIN KERNKRAFTWERK
PROCÉDÉ ET SYSTÈME DE REFROIDISSEMENT PASSIF PAR IMPULSIONS POUR CENTRALE NUCLÉAIRE

(30) Priority: 09.03.2020 CN 202010159518
(43) Date of publication of application: 10.11.2021
(73) Proprietor: Suzhou Nuclear Power Research Institute Co., Ltd, Suzhou, Jiangsu 215004 (CN); China General Nuclear Power Group Corporation, Shenzhen, Guangdong 518026 (CN); CGN Power Co., Ltd., Shenzen, Guangdong 518026 (CN)
(72) Inventor: WU, Zhenhua, Jiangsu 215004 (CN); XU, Junjun, Jiangsu 215004 (CN); SUN, Kaibao, Jiangsu 215004 (CN); HUANG, Weigang, Jiangsu 215004 (CN)
(74) Representative: ZHAOffice SPRL
(86) International application number: PCT/CN2020/128756
(87) International publication number: WO 2021/179660

(56) References cited:
- CN-A- 102 737 739
- CN-A- 104 464 846
- CN-A- 104 952 495
- CN-A- 110 534 214
- CN-A- 110 726 132
- CN-A- 111 370 153
- CN-U- 209 641 363
- JP-A- S5 455 295
- JP-A- 2002 372 599
- KR-B1- 101 447 029

## Description

### FIELD OF THE INVENTION

The application relates to the field of nuclear power, in particular to a passive pulse cooling method and a system for a nuclear power plant.

### BACKGROUND OF THE INVENTION

After the shutdown of nuclear reactor, it is necessary to continually cool the core to remove decay heat and avoid uncontrolled release of radioactive materials caused by the core meltdown. The reliability of residual heat removal system is directly related to the control of accident unit.

The 2011 Fukushima nuclear accident in Japan is a level 7 nuclear safety accident owing to the earthquake and tsunami, in which the nuclear power plant lost all power and feedwater and could not use the forced cooling measure to remove the fuel residual heat, thus resulting in the core meltdown and a large release of radioactive substances to the environment. This accident is similar to the limiting faults "Station Black-Out (SBO) together with total loss of feedwater", with the following characteristics:
(1) Due to the SBO, the safety-related and non-safety related motors are all failed, and the water injection function cannot be performed;
(2) The steam generator will lose cooling water injection immediately or after a period of delay;
(3) The plant operating personnel on duty can not effectively control the unit and need external support who could not arrive in time (15mins to several hours);
(4) The access of external supporting equipment takes a certain time (more than 3h);
(5) When operating at power condition, there is less water in the steam generator. If the SBO and total loss of feedwater are occurred at the same time, the steam generator will soon drain out due to the residual heat following scram, and the temperature and pressure in the primary loop will increase to the setpoints of opening the pressurizer safety valve. This will cause the safety valve opened to remove the heat until the core uncovered, heated and melted. According to the research, the steam generator empties in about 0.75 to 1h and the core melts in 2 to 2.5h.

The state oriented accident procedure (SOP) adopted by China CPR1000 series PWR nuclear power plant incorporates the SBO accident and the total loss of feedwater, but does not consider the combination of these two accidents. The SOP requires to perform ECP1 when the station loses all power supply and ECP4 to deal with the total loss of feedwater. For example, in ECP1, the operator is required to maintain the core cooling through the turbine driven auxiliary feedwater pump, prevent the shaft seal break using hydrotest pump, and wait the power supply to be restored. While in ECP4, the "feed and bleed" can be put into service to cool the core and allow to fallback. As for the SBO with total loss of feedwater, the plant should enter into the ECP4 (for NSSS degradation) with the steam generator dried up. However, the primary water injection (high pressure safety injection) fails at that time, and the core will melt in advance (within 2h) due to the accelerated loss of primary coolant if the "feed and bleed" starts up. If the ECP1 is being executed and ECP4 not entered, the primary pressure will still remain above 100bar after the core is exposed, which will eventually lead to the severe consequences of high-pressure core meltdown and direct containment heating.

After the Fukushima nuclear accident, Chinese nuclear power plants have taken a series of improvement actions, such as design and installation of temporary water injection systems at the primary and secondary sides, in response to the extreme accident of "SBO combined with total loss of feedwater". Nevertheless, it usually takes 3 to 4h for these systems to be connected and put into operation. The improvement actions proposed after the Fukushima accident have no corresponding mitigation measures prior to operation, so the time left for the emergency personnel to perform is very tight.

Although the GEN III nuclear power plants, taking AP1000 as an example, can effectively handle the accident of SBO with total loss of feedwater, because of its design of the steel containment and water tank at the top of containment, as well as the secondary passive cooling system, it is difficult to apply the same design in the GEN II nuclear power plants, and the cost is very high.

The technology which becomes a background refers to the preceding patent documents of the following: CN 104952 495A, JP S5455295A, KR 101447029B1 and CN 102737739A.

CN 104952495A discloses a secondary side residual heat removal system for a twin-reactor nuclear power plant. A first unit and a second unit respectively comprise a steam discharge pipeline and a steam discharge valve, wherein the steam discharge pipelines are connected to a main steam pipeline between a main steam isolation valve and a steam generator; the first unit and the second unit also comprise an emergency water supply pipeline and an emergency water supply tank; the emergency water supply pipeline is connected with the steam generator and the emergency water supply tank; two ends of a shared pipeline of the outlet of an emergency water supply pump are respectively connected with the emergency water supply pipeline between the emergency water supply pump of the first unit and the second unit and the emergency water supply isolation valve; and two ends of the shared pipeline of the inlet of the emergency water supply pump are respectively connected with the emergency water supply pipeline between the emergency water supply pump of the first unit and the second unit and the emergency water supply tank. The properly increased residual heat removal system with passive characteristics is shared by two systems, the cost can be reduced, the existing design has diversity, and the safety of the nuclear power unit is further improved.

JP S5455295A discloses a residual heat removal system for a fast breeder reactor, wherein a branch pipe branched from a discharge side of the secondary main circulation pump is connected to the sodium retention tank. The sodium retention tank has a shape such that the coolant contained therein has a wide free liquid level, and the volume of the coolant due to the temperature change of the coolant in the-method main cooling system is reduced.

KR 101447029B1 discloses a multi-stage safety iniection apparatus.

CN 102737739A discloses a secondary side emergency water injection system.

However, they fail to disclose how to increase the time in which the available water inventory might be used to cool the core under emergency conditions.

### SUMMARY OF THE INVENTION

The purpose of the invention is to provide a passive pulse cooling method and system for the nuclear power plants against the above defects of the existing technique.

The technical scheme is to construct a passive pulse cooling method for the nuclear power plants, which can be operated under the condition of total loss of feedwater or SBO combined with total loss of feedwater. The method comprises the following steps:
a steam generator isolation step: the atmospheric relief valve of each steam generator should be closed, and all steam (including steam header) and feedwater pipelines between each steam generator and secondary deaerators should be isolated; The steam vent branch pipe of the steam header need to connect with each steam generator; The steam supply branch pipe of the deaerators connecting the steam header and the deaerator; and a steam booster pipeline connected with the steam header and the deaerator and provided with a pressurizer valve and air-operated isolation valve;
separation of steam generator function: selecting an mode of operation according to requirements of emergency response strategy, and dividing all steam generators into two parts: power-operated steam generator and cooling steam generator according to the operating mode;
a cooling steam generator pressure relief: lowering pressure setpoints of the atmospheric relief valve of the cooling steam generator and waiting for the atmospheric relief valve of the cooling steam generator to open;
a deaerator first-stage pressurization: opening an air-operated isolation valve on the steam booster pipeline so as to pressurize the deaerator with the residual high-pressure steam in the steam pipeline;
a feedwater pipeline opening: deisolation of the feedwater pipeline of the cooling steam generator;
a deaerator second-stage pressurization step: deisolation of the steam vent branch pipe connected to the power-operated steam generator to maintain a pressure of the steam line of the conventional island and continuously pressurize the deaerator.

In the method of the present invention, the method can isolate all steam pipelines between each steam generator and the deaerator in the following ways: closing main steam isolation valves on the steam vent branch pipe connected to each steam generator and main steam bypass valves; closing steam regulating valve of the deaerator on the steam supply branch pipe of the deaerator, and closing the air-operated isolation valve on the steam booster pipeline;
deisolation of the steam vent branch pipe connected to the power-operated steam generator comprises opening the main steam bypass valve on the bypass of the main steam isolation valve of each steam generator.

In the method of the present invention, the method can isolate all the feedwater pipelines between the steam generators and the deaerator in the following ways: closing isolation valves on pipelines connecting the deaerator to a feedwater main pipe, closing main feedwater regulating valves on feedwater branch pipes between the steam generators and the feedwater main pipes, and closing main feedwater bypass regulating valves;
deisolation of the feedwater pipeline of the cooling steam generator includes opening the isolation valves on pipelines connecting the deaerator to the feedwater main pipe, and opening the main feedwater regulating valve on the feedwater branch pipe between the feedwater main pipe and the cooling steam generator and / or the main feedwater bypass regulating valve on the bypass of the main feedwater regulating valve.

In the method of the present invention, selecting the operating mode according to requirements of emergency response strategy includes:
if the total loss of feedwater condition occurs, selecting a fast fallback mode ;
if the total loss of feedwater occurs with SBO, selecting a hold mode;
wherein, the number of cooling steam generators in the fast fallback mode is larger than that in the hold mode.

In the method of the present application, dividing all steam generators into power-operated steam generators and cooling steam generators according to the operating mode includes:
in the fast fallback mode, from all three steam generators, two steam generators are used as the cooling steam generator, and the remaining one is used as the power-operated steam generator;
in the hold mode, one of the three steam generators is used as the cooling steam generator, and the remaining two steam generators are used as the power-operated steam generator.

In the method of the present application, the cooling steam generator pressure relief step includes: gradually lowering the pressure setpoints of the atmospheric relief valve of the cooling steam generator to reduce the pressure of the cooling steam generator until the atmospheric relief valve of the cooling steam generator is fully open.

The present application further conducts a passive pulse cooling system for the nuclear power plants, for realizing the method according the above, the system includes multiple steam generators and secondary deaerators, steam pipelines and feedwater pipelines are connected between the multiple steam generators and the deaerators, wherein, the steam pipelines comprise: a steam header; a steam vent branch pipe connecting each steam generator with the steam header; a steam supply branch pipe of the deaerator connecting the steam header and the deaerator; and a steam booster pipeline connected with the steam header and the deaerator and provided with a pressurizer valve and an air-operated isolation valve.

In the system of the present application, the two air-operated isolation valves and the pressurizer valve between the two air-operated isolation valves are arranged on the steam booster pipeline.

In the system of the present application, one end of the steam booster pipeline is connected with the steam header; the other end is connected with an interface directly connected with an air space of the deaerator, or is connected to the downstream of the steam regulating valve of the deaerator of the steam supply branch pipe of the deaerator, or is connected with a water intake pipeline of the deaerator.

In the system of the present application, the feedwater pipeline comprises a feedwater main pipe; a pipeline connected from the deaerator to the feedwater main pipe; a feedwater branch pipe connecting the feedwater main pipe and each steam generator and distributing medium in the feedwater main pipe to each steam generator; wherein, a main feedwater regulating valve is set on the feedwater branch pipe connected to each steam generator, and a main feedwater bypass regulating valve is set on the bypass of the main feedwater regulating valve;
the main steam isolation valve and the atmospheric relief valve on upstream of the main steam isolation valve are set on the steam vent branch pipe connected by each steam generator, and the main steam bypass valve is set on the bypass of each main steam isolation valve.

The passive pulse cooling method and system for nuclear power plant have the following beneficial effects:
1) When the total loss of feedwater or the total loss of feedwater with SBO occurs, the function of multiple steam generators of the nuclear power plant are separated into two parts a power-operated steam generator and a cooling steam generator, the pressure difference between high-pressure steam in the nuclear steam supply system and the cooling steam generator is used as water injection power, high-pressure steam of the steam pipeline and the power-operated steam generator is used for pressurizing the deaerator, an atmospheric relief valve of the cooling steam generator is opened for pressure reduction, and water in the deaerator is injected into the cooling steam generator in a passive mode through the pressure difference, so water injection of the steam generator is achieved; in the whole operation process of the application, the water intake stage and the steam exhaust stage present the form of staggered periodic change, and the cooling power changes in the form of pulse nonlinear, so as to complete primary cooling;
2) it can provide a first-choice response measure for the total loss of feedwater with SBO accident; it can stabilize the primary temperature, delay the core melt, provide sufficient time for the improvement measures and emergency support after the Fukushima accident, and contribute to the accident control; it can provide a mitigation means for the total loss of feedwater to prevent the unit from entering the "feed and bleed", resulting in serious consequences of long-term overhaul or even early decommissioning;
3) it does not rely on power supply and can still establish steam generator feedwater even under the SBO condition; according to the actual available equipment of the unit, the pressure difference between the high-pressure equipment in the nuclear steam supply system (NSSS) and the low-pressure cooling steam generator is used to supply water to the steam generator in a passive way to restore the core cooling;
4) using the high temperature water of the deaerator as the feedwater source, the water temperature of the deaerator is high, the water quality is good, the oxygen content is low, and there is no impurity, and the damage to the steam generator is small;
5) it has no effect on the normal operation of the system, but it can solve the remaining problems of the improvement items after Fukushima. At the same time, the control strategy of losing all feedwater can be optimized, and the "feed and bleed" can be used to avoid the accident escalation, which will lead to serious consequences of the maintenance and even early decommissioning of the unit;
6) deeply study and explore the potential of the existing equipment functions of the unit, it has the advantages of small modification of the unit, low cost and easy implementation;
7) all nuclear power plants equipped with deaerator can be equipped with passive pulse cooling system, which can improve the ability of nuclear power plants to cope with extreme accidents.

### BRIEF DESCRIPTION OF THE DRAWINGS

In order to more clearly illustrate the application or the technical solutions of the existing technique, the following will briefly introduce the drawings that need to be used in the existing technique. It is obvious that the drawings in the following description are only the examples of the application. For those skilled in the art, other drawings can be obtained from the provided drawings without paying creative work:
Fig. 1 is a structural diagram of the passive pulse cooling system of the nuclear power plant of the present application;
Fig. 2 is a schematic diagram of the first connection of the steam booster pipeline of the present application;
Fig. 3 is a schematic diagram of the second connection of the steam booster pipeline of the present application;
Fig. 4 is a schematic diagram of the third connection of the steam booster pipeline of the present application;
Fig. 5 is a flow chart of the passive pulse cooling method of the nuclear power plant of the present application;
Fig. 6 is a schematic diagram of the state of the system after performing steps S 1 and S2 in a specific example;
Fig. 7 is a schematic diagram of the state of the system after performing steps S3 in a specific example;
Fig. 8 is a schematic diagram of the state of the system after performing steps S4 in a specific example;
Fig. 9 is a schematic diagram of the state of the system after performing steps S5 in a specific example;
Fig. 10 is a schematic diagram of the state of the system after performing steps S6 in a specific example.

### DETAILED DESCRIPTION OF THE PREFERRED EMBODIMENT

Due to the SBO accident, all rotating equipment failed, and feedwater to the steam generator was not available through the water pump. The application can pressurize the deaerator by using the high-temperature and high-pressure steam in the NSSS system and the high-pressure steam generator in a passive way, so as to inject the water in the water tank of the deaerator into the low-pressure steam generator to cool the core.

The general idea of the application is as follows: when the total loss of feedwater or the total loss of feedwater with SBO occurs, first isolating all the steam pipelines and feedwater pipelines of the steam generator; then performing function separation to all the steam generators, selecting an operating mode according to requirements of emergency response strategy, and dividing all steam generators into two parts: power-operated steam generator and cooling steam generator according to the operating mode; the pressure relief is carried out for the cooling steam generator, and then the air-operated isolation valve on the steam booster pipeline line is opened. The residual high pressure steam in the steam pipeline is used to pressurize the deaerator once, then the feedwater pipeline is opened, and the separation of the steam vent branch pipe connected by the power-operated steam generator is removed to pressurize the deaerator at the second stage.After putting into operation in this way, the pressure difference between high-pressure steam in the nuclear steam supply system and the cooling steam generator is used as water injection power, high-pressure steam of the steam pipeline and the power-operated steam generator is used for pressurizing the deaerator, an atmospheric relief valve of the cooling steam generator is opened for pressure reduction, and water in the deaerator is injected into the cooling steam generator in a passive mode through the pressure difference, so water injection of the steam generator is achieved. In the whole operation process of the application, the water intake stage and the steam exhaust stage present the form of staggered periodic change, and the cooling power changes in the form of pulse nonlinear, so as to complete the primary cooling.

In order to better understand the above technical scheme, the above technical scheme will be described in detail in combination with the drawings of the specification and the specific implementation mode, in which the typical embodiments of the application are given. However, the present application can be implemented in many different forms and is not limited to the embodiments described herein. On the contrary, the purpose of providing these embodiments is to make the disclosure of the present application more thorough and comprehensive. It should be understood that the embodiment of the application and the specific features in the embodiment are the detailed description of the technical scheme of the application, not the limitation of the technical scheme of the application. In the case of no conflict, the embodiment of the application and the technical features in the embodiment can be combined with each other.

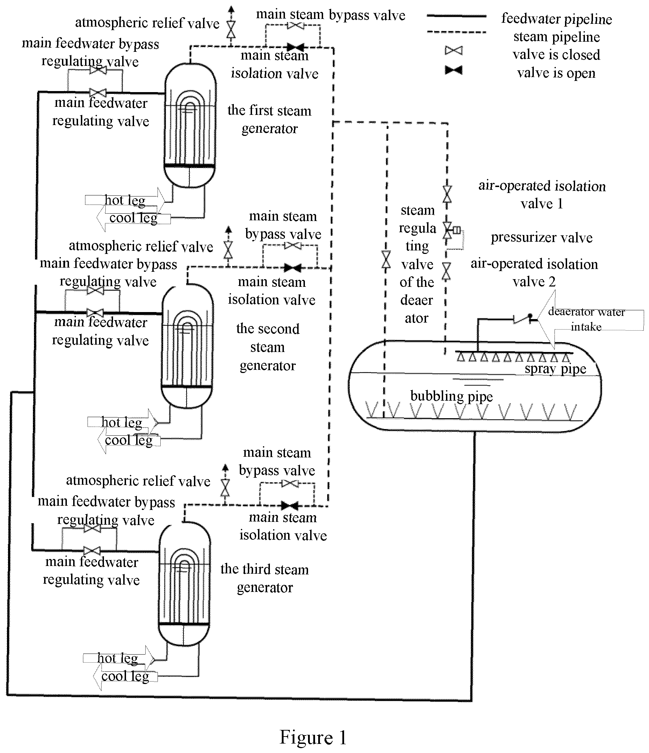

Referring to Fig. 1, the passive pulse cooling method for the nuclear power plant of the present application can be realized by the system in Fig. 1. The system includes multiple steam generators (10,20,30) and a secondary deaerator (40), and the number of steam generators is not limited, generally three. The steam generator and the secondary deaerator are common equipment in the nuclear power system. Steam pipelines and feedwater pipelines are connected between the steam generators and the deaerator.

Wherein, the steam pipelines comprise:
1) a steam header (50);
2) multiple steam vent branch pipes (110,210,310), which are one to one corresponding to multiple steam generators (10,20,30), each vent branch pipe is connected with the corresponding steam generator and the steam header, and a plurality of exhaust branch pipes are used to lead steam of each steam generator and import into the steam header. The main steam isolation valve (120,220,320) and the atmospheric relief valve (130,230,330) on the upstream of the main steam isolation valve are set on the steam vent branch pipe connected by each steam generator. Each main steam isolation valve is equipped with a bypass, and the bypass of each main steam isolation valve is equipped with a main steam bypass valve (140,240,340).
3) a steam supply branch pipe of deaerator (410), connected with the steam header and the deaerator (40), which is used to distribute the steam in the steam header to the deaerator. The steam regulating valve (420) of the deaerator is set on the steam supply branch pipe of the deaerator.
4) a steam booster pipeline (430), connected with the steam header and the deaerator, and the steam booster pipeline is provided with a pressurizer valve (460) (that is, a pressure reducing and stabilizing valve) and an air-operated isolation valve (440,450). Specifically, two air-operated isolation valves and one pressurizer valve between the two air-operated isolation valves are arranged on the steam booster pipeline in the embodiment. The air-operated isolation valve is designed to be opened in case of loss of gas. In case of power loss in the whole plant, the valve can be opened and put into operation by venting. The purpose of the pressurizer valve is to ensure that the pressure of the water tank of the deaerator does not exceed the design pressure, stabilize the pressure in the water tank of the deaerator, and ensure the safety of the deaerator.

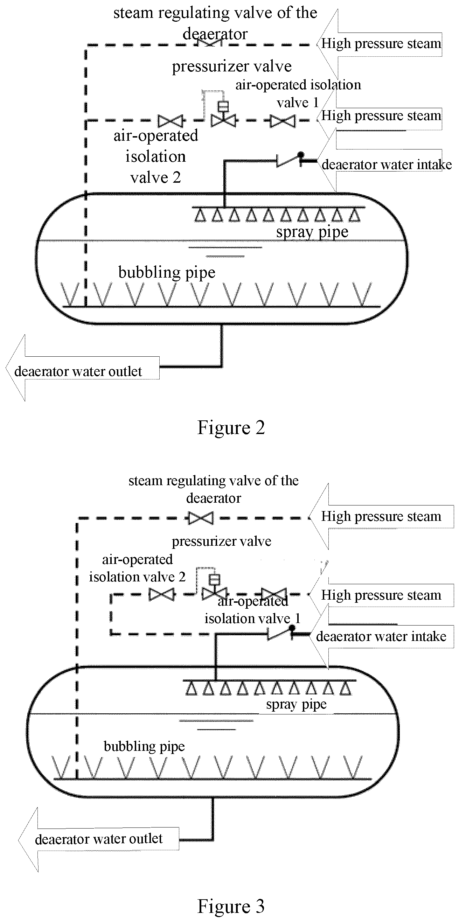

The above steam header, steam vent branch pipe and steam supply branch pipe of deaerator are all existing pipelines of nuclear power system. The application only needs to add a steam booster pipeline, one end of the steam booster pipeline is connected with the steam header, and the other end is connected with the deaerator. In order to connect the steam booster pipeline on the deaerator, the application provides three ways:
The first way is to connect the steam booster pipeline (430) to the downstream position of the steam regulating valve (420) of the deaerator of the steam supply branch pipe (410) of the deaerator. Referring to figure 2, the original steam distribution device of the deaerator can be used in this way. The steam flows out through the bubbling pipe immersed in water to heat the feed water in the water tank of the deaerator, and at the same time to deaerate and pressurize the deaerator. The advantage of this method is that the workload of transformation is minimum. The disadvantage of this method is that the high-pressure steam directly enters into the water, the pressurization speed of the deaerator is slow, and the water in the deaerator is heated at the same time, which consumes steam and the feed water with high enthalpy is not conducive to taking away the heat of the primary circuit.

The second way is to connect the steam booster pipeline (430) to the water intake pipeline (470) of the deaerator (40). Referring to Fig. 3, under this way, the steam feed sprayer with steam passing through the outlet of the water intake pipeline (the triangle in the figure represents the feedwater sprayer ) enters the upper space of the water tank of the deaerator, and directly pressurize the deaerator. This method can directly inject high-pressure steam into the upper gas space of deaerator, and pressurize the deaerator quickly. It is unnecessary to heat the feedwater with steam, so as to reduce the consumption of high-pressure steam. The feedwater with lower enthalpy value is conducive to cooling steam generator to take more heat. The disadvantage of this method is that the high pressure steam injection resistance is increased due to the installation of sprayers at the outlet of the deaerator feedwater pipeline.

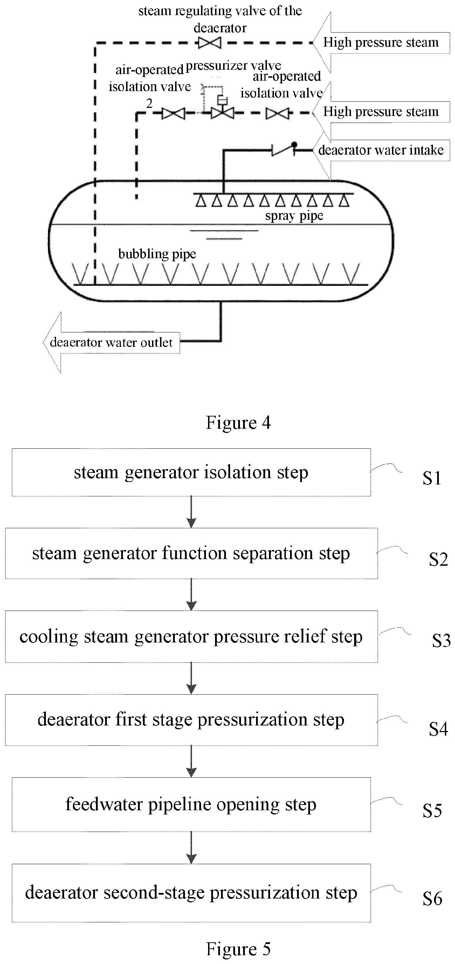

The third way is to connect the steam booster pipeline (430) to the interface directly connected with the gas space of the deaerator on the deaerator. Referring to figure 4, the steam directly enters the upper space of the water tank of the deaerator through the pipeline to pressurize the deaerator. Although this method will increase a small amount of transformation cost, it has the advantage of connecting the second method. At the same time, it can minimize the steam injection resistance, which is conducive to quickly pressurizing the deaerator.

Of course, the purpose of the above three connection modes is the same, which is to introduce steam into the deaerator, and all belong to the protection scope of the application.

The feedwater pipeline comprises:
1)the feedwater pipeline (70) from the deaerator (40) to the feedwater main pipe (60) of the steam generator which is generally the existing pipeline of the secondary circuit of the unit, such as the bypass pipeline of the high-pressure heater, so as to minimize the flow resistance along the way;
2) the feedwater main pipe (60) connected with the pipeline in 1) above. The feedwater main pipe is used to deliver the water from the deaerator to each steam generator.
3) a plurality of feedwater branch pipes (150, 250, 350), one-to-one corresponding to a plurality of steam generators, and each feedwater branch pipe is separately connected with the corresponding steam generator and the feedwater main pipe to distribute the medium in the feedwater main pipe to each steam generator. The main feedwater regulating valve is set on the feedwater branch pipe connected to each steam generator, each main feedwater regulating valve (160, 260, 360) is set with a bypass, and the bypass of each main feedwater regulating valve (170, 270, 370) is set with a main feedwater bypass regulating valve.

Based on the above system, the passive pulse cooling method for the nuclear power plant of the present application can be realized. The method of the present application is implemented when an total loss of feedwater or an total loss of feedwater due to power loss superposition of the whole plant occurs. Referring to Fig. 5, the method includes the following steps:
S1) a steam generator isolation step: closing atmospheric relief valves of each steam generator and isolating steam pipelines and feedwater pipelines between each steam generator and a deaerator of the secondary circuit.

Specially, isolating all steam pipelines between each steam generator and the deaerator in the following ways: closing main steam isolation valves on the steam vent branch pipe connected to each steam generator and main steam bypass valves on bypass of the main steam isolation valves; closing steam regulating valve of the deaerator on the steam supply branch pipe of the deaerator, and closing the two air-operated isolation valve on the steam booster pipeline. In fact, the main steam bypass valve and the air-operated isolation valve are usually closed, so this step is mainly to close the main steam isolation valve.

Specially, isolating all the feedwater pipelines between the steam generators and the deaerator in the following ways: closing isolation valves on pipelines connecting the deaerator to a feedwater main pipe, closing main feedwater regulating valves on feedwater branch pipes between the steam generators and the feedwater main pipes, and closing main feedwater bypass regulating valves on bypass of the main feedwater regulating valves.

S2) a steam generator function separation step: selecting an operating mode according to requirements of emergency response strategy, and dividing all steam generators into two parts: power-operated steam generator and cooling steam generator according to the operating mode. Among them, power-operated steam generator refers to the steam generator used to pressurize deaerator. Cooling steam generator refers to the steam generator to be used to receive water from the deaerator and to cool the primary circuit.

Preferably, in a preferred embodiment, the step specifically includes: if the total loss of feedwater occurs, selecting a fast fallback mode; if the total loss of feedwater due to power loss superposition of the whole plant occurs, selecting a hold mode; wherein, the number of cooling steam generators in the fast fallback mode is larger than that in the hold mode. For example, there are three steam generators in the nuclear power system, in the fast fallback mode, from all three steam generators, two steam generators are used as the cooling steam generator, and the remaining one is used as the power-operated steam generator; in the hold mode, one of the three steam generators is used as the cooling steam generator, and the remaining two steam generators are used as the power-operated steam generator.

As for the fast fallback mode: taking three steam generators as an example, after the total loss of feedwater, the cooling link of RRA-RRI-SEC is still valid because the safety level power supply is still available. Two steam generators can be set as "cooling steam generator" and the other one as "power-operated steam generator" . Pressurizing the deaerator and injecting water into the steam generator at maximum speed. Use the water stored in deaerator to realize maximum speed cooling. The average temperature of primary circuit is cooled from 300 °C to 190 °C, and RRA input condition is met, so as to avoid the input of "feed and bleed".

As for the hold mode: take three steam generators as an example, set one steam generator as "cooling steam generator", to control the water injection flow, stabilize the primary circuit temperature, and wait for the emergency organization to resume the operation of feedwater system. This mode can provide at least 6 hours of emergency buffer time, thus significantly improving the success rate of feedwater system recovery.

As for the total loss of feedwater: according to the existing emergency response strategy, "feed and bleed" will be used to maintain core cooling and retreat. The implementation of the strategy is divided into two steps: 1. wait; 2. open the pressurizer relief pipeline and start safety injection; 3. When the containment spray is put into operation, the heat is transferred to the equipment cooling water system (RRI) through the containment spray system (EAS) cooler, and then to the sea by the important service water system (SEC). This strategy can effectively bring the unit to the state where the residual heat removal system is connected, but it also does great harm to the unit. After the implementation of "feed and bleed", the unit may face the consequences of long-term shutdown for system equipment maintenance, or even direct decommissioning. The application can be used as a mitigation means for the unit when the total loss of feedwater occurs. The method and system of the application can be used to establish the steam generator feed water in pulse mode before the "feed and bleed" is put into operation, and the primary circuit is pulled back to the connection state of the residual heat removal system according to the "fast fallback mode", so as to avoid the "feed and bleed" being put into operation.

As for the total loss of feedwater due to power loss superposition of the whole plant: according to the existing emergency response strategy, "power loss of the whole plant" will rely on the steam driven auxiliary feed water pump to maintain core cooling, "total loss of feedwater" needs to enter the "feed and bleed". Because the existing accident regulations do not consider the situation of "total loss of feedwater with SBO", according to the current accident procedure, if entering the "feed and bleed", the high-pressure safety injection cannot be started due to the loss of power, and the primary loop water filling means are lost, the "feed and bleed" will accelerate the primary loop water loss, which will lead to the early melting of the core (within two hours). If the reactor is not only in the "feed and bleed", the primary circuit will still be above 100 bar after the core is exposed, which will eventually lead to the adverse consequences of high-pressure fusion reactor and direct heating of containment. The application can be used as a response measure after the "the total loss of feedwater due to power loss superposition of the whole plant", operate in the "maintain" mode, control the water injection flow, stabilize the primary circuit, wait for the emergency force to resume the operation of the feedwater system, strive for the emergency buffer time, and is conducive to the successful recovery of the feedwater system.

S3) a cooling steam generator pressure relief step: lowering pressure setpoints of the atmospheric relief valve of the cooling steam generator and waiting for the atmospheric relief valve of the cooling steam generator to open. In this way, the water consumption of the other two steam generators can be reduced, and the primary circuit temperature can be reduced as much as possible.

S4) a deaerator first stage pressurization step: opening an air-operated isolation valve on the steam booster pipeline so as to pressurize the deaerator with the residual high-pressure steam in the steam pipeline.

In order to ensure safety and reliability, it is preferred to gradually lower the pressure setpoints of the atmospheric relief valve of the cooling steam generator to reduce the pressure of the cooling steam generator until the atmospheric relief valve of the cooling steam generator is fully opened.

S5) a feedwater pipeline opening step: deisolating the feedwater pipeline of the cooling steam generator.

Specifically, deisolation of the feedwater pipeline of the cooling steam generator includes opening the isolation valves on pipelines connecting the deaerator to the feedwater main pipe, and opening the main feedwater regulating valve on the feedwater branch pipe between the feedwater main pipe and the cooling steam generator and / or the main feedwater bypass regulating valve on the bypass of the main feedwater regulating valve.

S6) a deaerator second-stage pressurization step: deisolating the steam vent branch pipe connected to the power-operated steam generator to maintain an pressure of the steam line of the conventional island and continuously pressurize the deaerator. Wherein, deisolation of the steam vent branch pipe connected to the power-operated steam generator comprises opening the main steam bypass valve on the bypass of the main steam isolation valve of each steam generator.

It should be noted that the above steps S5 and S6 can be carried out at the same time.

After performing the above steps, the steam from the power-operated steam generator maintains the pressure of the deaerator at the designed maximum. With the decrease of water loading, the steam will be dried up gradually, the pressure of the cooling steam generator will decrease, and the steam flow will decrease. As the pressurizer valve on the steam booster pipeline of the deaerator can ensure the pressure stability of the deaerator, the pressure difference between the deaerator and the cooling steam generator will gradually increase as the pressure of the cooling steam generator gradually decreases. When the pressure difference increases enough to overcome the flow resistance, the water in the deaerator begins to inject into the cooling steam generator to establish the main feed water flow. This stage is the water intake stage. Further, with the heating and vaporization of the feedwater in the cooling steam generator, the pressure in the steam generator increases, and the pressure difference between the deaerator and the cooling steam generator will decrease. When the pressure difference is not enough to overcome the flow resistance of the feedwater pipeline, the main feed water flow will be interrupted. At this time, the steam discharge flow in the cooling steam generator rises rapidly, thus taking away the heat of the primary circuit, which is the steam exhaust stage. With the progress of steam exhaust, the water volume in the cooling steam generator gradually decreases, the pressure decreases, the feedwater pressure difference increases, the main feedwater flow is re-established, and a new round of cooling continues. In the whole operation process, the water intake stage and the steam exhaust stage present the form of staggered periodic change, and the cooling power changes in the form of pulse nonlinear, so as to complete the cooling of the primary circuit.

The following is an example to illustrate the configuration of passive pulse cooling system in CP 1000 unit.

### 1) source of water

Enough water is needed to cool the core. In this case, the deaerated water in the secondary circuit deaerator (ADG) of the unit is used as the cooling water source. The total volume of deaerator of CPR1000 unit is 708m³. During normal operation, there is 408m³storage saturated water and 300m³saturated steam. Under the condition of different ADG water loading, based on conservative consideration and assuming that the water in the deaerator is saturated, the maintenance time of cooling the core after 20 minutes of shutdown is calculated to be 177-426 minutes. Table 1 below shows the shutdown times for different ADG pressures and ADG deaerator water loads.

**Table 1**

| ADG pressure | ADG deaerator water loads | | | |
|---|---|---|---|---|
| | 200 m³ | 300 m³ | 350 m³ | 380 m³ |
| 10 bar | 185 min | 314 min | 383 min | 426 min |
| 13 bar | 177 min | 299 min | 366 min | 407 min |

### 2) water injection power

After the accident of "power loss of the whole plant + loss of all feedwater", it is necessary to restore the core cooling as soon as possible. Because all rotating equipment are invalid, it is impossible to supply water to SG through water pump. Because of the high position and pressure of the steam generator, water injection can not be realized by gravity potential energy. There are still a lot of high temperature and high pressure water and high temperature and high pressure steam in the nuclear steam supply system. The pressure difference between the high pressure steam in the nuclear steam supply system and the low pressure steam generator can be used as water injection power to drive the low pressure water into the steam generator.

The deaerator of CPR1000 unit is located at the elevation of 28m, slightly higher than the intake of steam generator feedwater pipeline, and the potential energy difference of passive water injection is small. The maximum design pressure of deaerator is 14bar.a. After shutdown, the pressure setting of the steam generator was automatically adjusted to 78.5 bar.g, even if the main steam isolation valve (MSIV) was closed, the steam pressure in the downstream pipeline was above 60 bar. This part of energy can be used to raise and maintain the deaerator pressure to the design pressure.

### 3) Water injection conditions and channels

After the steam generator is isolated, the water injection channel shall be opened as soon as possible, and the main feedwater regulating valve and / or the main feedwater bypass regulating valve shall be opened. Since all the atmospheric relief valve of the cooling steam generator are opened, the water in the cooling steam generator will evaporate and discharge rapidly. With the discharge of the steam, the pressure of the cooling steam generator decreases, and the pressure difference between the deaerator and the cooling steam generator will gradually increase. When the pressure difference increases enough to overcome the flow resistance, the water in the deaerator will enter the cooling steam generator driven by the pressure difference.

### 4) System put into operation

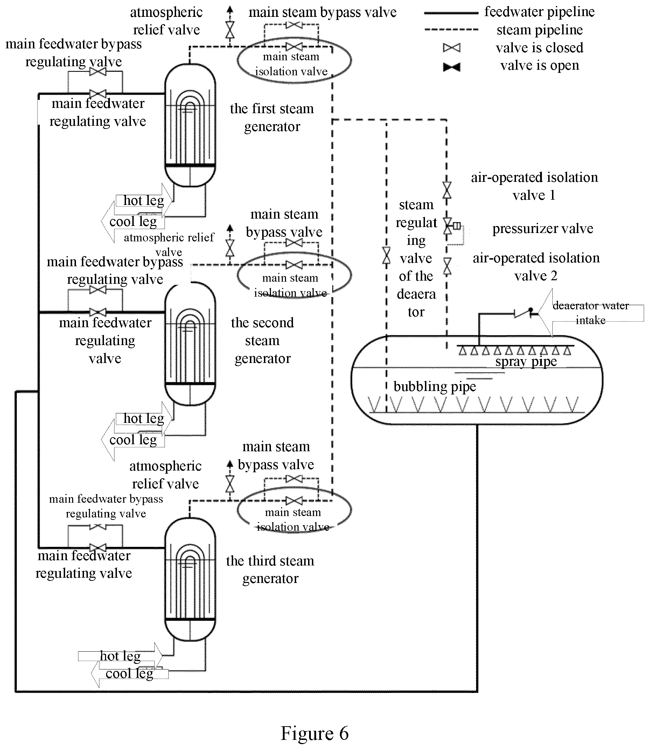

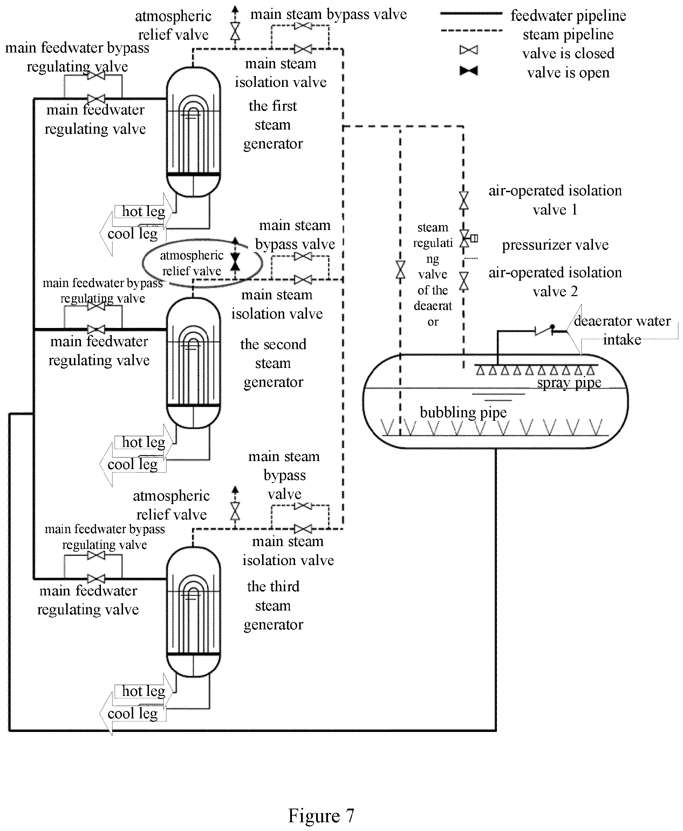

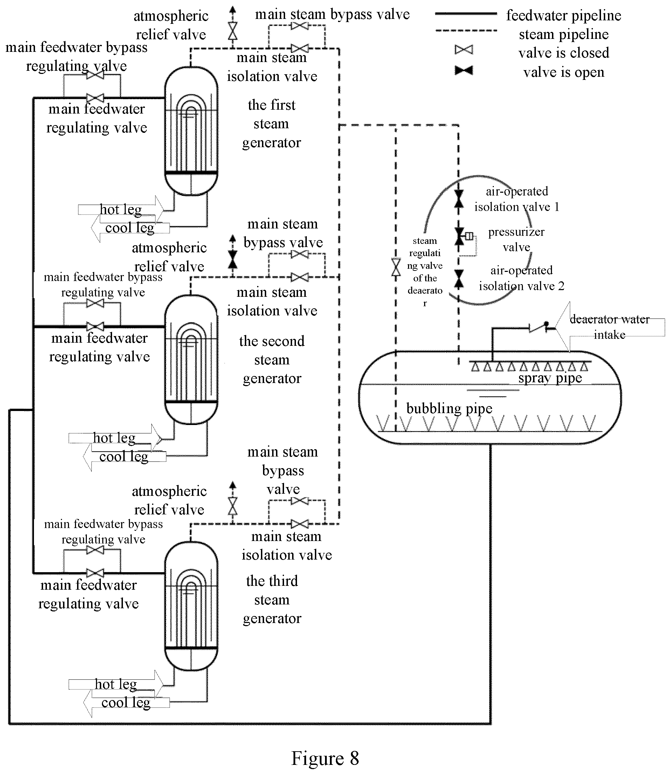

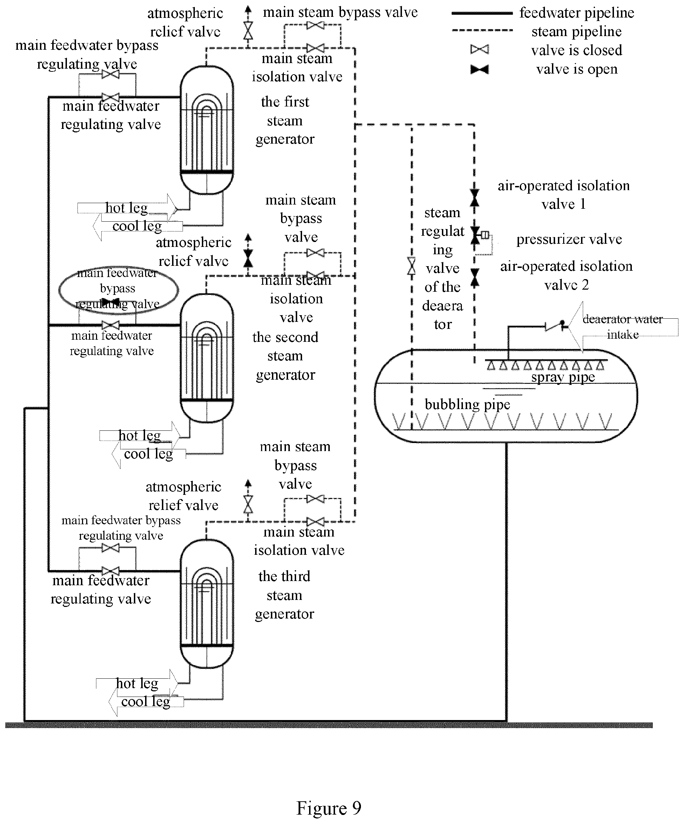

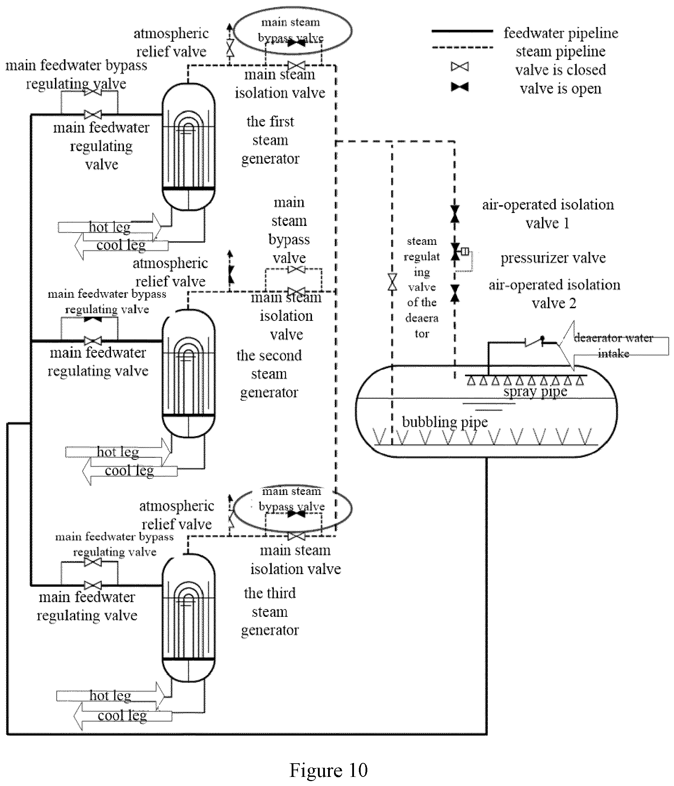

Taking one steam generator as the cooling steam generator and the other two as the power-operated steam generator as an example, the system is put into operation according to steps S1-S6. Specifically, referring to figure 6, after steps S 1 and S2, the main steam isolation valves of three steam generators are closed. steam generator 2 is used as cooling steam generator, and steam generator 1 and 3 are used as power-operated steam generator. Refer to figure 7, step S3 is executed to lower the atmospheric relief valve pressure setpoints of the cooling steam generator and relieve the pressure of the cooling steam generator. The atmospheric relief valve of the cooling steam generator is fully open finally. Referring to Fig. 8, step S4 is performed to pressurize the deaerator. Open the air-operated isolation valve on the deaerator steam booster pipeline of the deaerator, and use the residual steam of the steam pipeline to pressurize the deaerator to the maximum design pressure. Refer to figure 9, step S5 is performed to open the feedwater line. Referring to Fig. 10, step S6 is performed to pressurize the deaerator. The system operates in pulse mode, and the water intake stage and steam exhaust stage are alternately carried out. For the steam generator, it is in the working condition of drying up and water filling and pressurization alternately. In figures 6-10, the valve with state change is circled with ellipse.

At the beginning of cooling, the primary side temperature of the steam generator is about 290 °C, the secondary side temperature is 170 °C (13bar. A), and the temperature difference is about 120 °C. With the cooling process, the temperature difference will gradually decrease. During normal operation, the intake temperature of the primary side of the steam generator is 327 °C, the feed water temperature of the secondary side is 224 °C, and the steam temperature is 284 °C. According to the calculation of the heating effect of the recycled water of the steam generator, the temperature of the secondary side of the tube sheet is about 270 °C, and the temperature difference between the primary and secondary sides is about 60 °C. From the perspective of temperature difference, the feed water temperature of passive pulse cooling using pressurized deaerator is not much lower than that of normal operation, and the steam generator can withstand this temperature difference. During cooling, due to the repeated drying / re-wetting of the wall surface, a certain stress will be generated on the heat transfer tube. Due to the small temperature difference between the cooling water and the wall surface, the stress should also be tolerable. Referring to table 2, we use special tools to calculate the maintenance time of ASG water tank of M310 unit and CPR1000 unit. After the ASG water tank is drained, the passive pulse cooling system will be put into operation, which can add about 14 hours of maintenance time. The self-sustaining time of CPR1000 unit was extended to 2 days.

**Table 2**

| | M310 | CPR1000 |
|---|---|---|
| Available volume of ASG water tank | 790m³ | 930m³ |
| Maintenance time to ASG water tank dry | 28.8h | 36.2h |
| maintenance time increased by 350 tons of ADG water (13bar) | 13.7h | 14.6h |
| maintenance time of joint operation | 42.5h | 48.6h |

To sum up, the beneficial effects of the application are as follows:
1) it can provide a first-choice response measure for the total loss of feedwater due to power loss superposition of the whole plant; it can stabilize the temperature of the primary circuit, delay the core melting time, provide sufficient time for the improvement measures and emergency support after the Fukushima accident, and contribute to the accident control;
2) it can provide a mitigation means for the total loss of feedwater to prevent the unit from entering the "charge and discharge mode", resulting in serious consequences of long-term overhaul or even early retirement of the unit;
3) the operating mode of pulse cooling is introduced, and the system does not rely on power supply and can still establish steam generator feedwater even when the whole plant loses power; according to the actual available equipment of the unit, the pressure difference between the high-pressure equipment in the nuclear steam supply system and the low-pressure cooling steam generator is used to supply water to the steam generator in a passive way to restore the core cooling;
4) using the high temperature water of the deaerator as the feedwater source, the water temperature of the deaerator is high, the water quality is good, the oxygen content is low, and there is no impurity, and the damage to the steam generator is small;
5) it has no effect on the normal operation of the system, but it can solve the remaining problems of the improvement items after Fukushima. At the same time, the control strategy of total loss of feedwater accidents can be optimized, and the "feed and bleed" can be used to avoid the accident upgrading, which will lead to serious consequences of the maintenance and even early retirement of the engine leader;
6) tapping the potential of the existing equipment functions of the unit, it has the advantages of small modification of the unit, low cost and easy implementation (only several valves, more than 10 meters of pipeline, etc. are added);
7) all nuclear power plants equipped with deaerator can be equipped with passive pulse cooling system, which can improve the ability of nuclear power plants to cope with extreme accidents.

It should be noted that the "connection" or "connected" mentioned in this paper not only includes the direct connection of two entities, but also includes the indirect connection through other entities with beneficial improvement effect. The term "and / or" as used herein includes any and all combinations of one or more related listed items. Unless otherwise defined, all technical and scientific terms used herein have the same meanings as those commonly understood by those skilled in the art of the present application. The terms used in the description of the application are only for the purpose of describing specific embodiments, and are not intended to limit the application.

The embodiments of the application are described above in combination with the drawings, but the application is not limited to the above specific embodiments. The above specific embodiments are only schematic, not restrictive. Ordinary technicians in the art can make many forms under the enlightenment of the application and without departing from the scope of the object and claims of the application, and these are within the protection of the application.

## Claims

1. A passive pulse cooling method for nuclear power plant, executed when a total loss of feedwater or a total loss of feedwater due to power loss superposition of the whole plant occurs, the method comprising the following steps:
a steam generator isolation step: closing atmospheric relief valves (130, 230, 330) of each steam generator (10, 20, 30);
a steam generator function separation step: selecting an operating mode according to requirements of emergency response strategy, and dividing all steam generators into two parts: power-operated steam generator and cooling steam generator according to the operating mode;
a cooling steam generator pressure relief step: lowering pressure setpoints of the atmospheric relief valve of the cooling steam generator and waiting for the atmospheric relief valve of the cooling steam generator to open;
a feedwater pipeline opening step: deisolating the feedwater pipeline of the cooling steam generator;
**characterized in that**:
the steam generator isolation step further comprises: isolating steam pipelines and feedwater pipelines between each steam generator (10, 20, 30) and a deaerator (40) of the secondary circuit; the steam pipelines comprise: a steam header (50); a steam vent branch pipe (110, 210, 310) connecting each steam generator (10, 20, 30) with the steam header (50); a steam supply branch pipe (410) of the deaerator (40) connecting the steam header (50) and the deaerator (40); and a steam booster pipeline (430) connected with the steam header (50) and the deaerator (40) and provided with a pressurizer valve (460) and an air-operated isolation valve (440, 450);
before the feedwater pipeline opening step, the method further comprises: a deaerator first stage pressurization step: opening an air-operated isolation valve (440, 450) on the steam booster pipeline (430) so as to pressurize the deaerator (40) with the residual high-pressure steam in the steam pipeline;
after the feedwater pipeline opening step, the method further comprises: a deaerator second-stage pressurization step: deisolating the steam vent branch pipe connected to the power-operated steam generator to maintain a
pressure of the steam line of the conventional island and continuously pressurize the deaerator (40).

2. The method according to claim 1, wherein, the method can isolate all steam pipelines between each steam generator (10, 20, 30) and the deaerator (40) in the following ways: closing main steam isolation valves (120, 220, 320) on the steam vent branch pipe (110, 210, 310) connected to each steam generator and main steam bypass valves (140, 240, 340) on bypass of the main steam isolation valves (120, 220, 320); closing steam regulating valve (420) of the deaerator on the steam supply branch pipe (410) of the deaerator, and closing the air-operated isolation valve (440, 450) on the steam booster pipeline (430);
deisolation of the steam vent branch pipe connected to the power-operated steam generator comprises opening the main steam bypass valve on the bypass of the main steam isolation valve (140, 240, 340) of each steam generator (10, 20, 30).

3. The method according to claim 1, wherein, the method can isolate all the feedwater pipelines between the steam generators (10, 20, 30) and the deaerator (40) in the following ways: closing isolation valves on pipelines (70) connecting the deaerator (40) to a feedwater main pipe (60), closing main feedwater regulating valves (160, 260, 360) on feedwater branch pipes between the steam generators (10, 20, 30) and the feedwater main pipes (60), and closing main feedwater bypass regulating valves (170, 270, 370) on bypass of the main feedwater regulating valves (160, 260, 360);
deisolation of the feedwater pipeline of the cooling steam generator includes opening the isolation valves on pipelines (70) connecting the deaerator (40) to the feedwater main pipe (60), and opening the main feedwater regulating valve (160, 260, 360) on the feedwater branch pipe between the feedwater main pipe and the cooling steam generator and / or the main feedwater bypass regulating valve (170, 270, 370) on the bypass of the main feedwater regulating valve (160, 260, 360).

4. The method according to claim 1, wherein, selecting the operating mode according to requirements of emergency response strategy includes:
if the total loss of feedwater occurs, selecting a fast fallback mode ;
if the total loss of feedwater due to power loss superposition of the whole plant occurs, selecting a hold mode ;
wherein, the number of cooling steam generators in the fast fallback mode is larger than that in the hold mode.

5. The method according to claim 1, wherein, dividing all steam generators into power-operated steam generators and cooling steam generators according to the operating mode includes:
in the fast fallback mode, from all three steam generators (10, 20, 30), two steam generators are used as the cooling steam generator, and the remaining one is used as the power-operated steam generator;
in the hold mode, one of the three steam generators (10, 20, 30) is used as the cooling steam generator, and the remaining two steam generators are used as the power-operated steam generator.

6. The method according to claim 1, wherein, the cooling steam generator pressure relief step includes: gradually lowering the pressure setpoints of the atmospheric relief valve of the cooling steam generator to reduce the pressure of the cooling steam generator until the atmospheric relief valve of the cooling steam generator is fully open.

7. A passive pulse cooling system for nuclear power plant, for realizing the method according to any one of claims 1-6, the system includes a plurality of steam generators (10, 20, 30), **characterized in that**, the system further includes a deaerator (40) of the secondary circuit, steam pipelines and feedwater pipelines connected between the plurality of steam generators (10, 20, 30) and the deaerator (40), wherein, the steam pipelines comprise: a steam header (50); a steam vent branch pipe (110, 210, 310) connecting each steam generator (10, 20, 30) with the steam header (50); a steam supply branch pipe (410) of the deaerator (40) connecting the steam header (50) and the deaerator (40); and a steam booster pipeline (430) connected with the steam header (50) and the deaerator (40) and provided with a pressurizer valve (460) and an air-operated isolation valve (440, 450).

8. The system according to claim 7, wherein, the two air-operated isolation valves and the pressurizer valve between the two air-operated isolation valves (440, 450) are arranged on the steam booster pipeline (460).

9. The system according to claim 7, wherein, one end of the steam booster pipeline (430) is connected with the steam header (50); the other end is connected with an interface directly connected with an air space of the deaerator (40), or is connected with a downstream position of the steam regulating valve (420) of the deaerator of the steam supply branch pipe (410) of the deaerator, or is connected with a water intake pipeline(470) of the deaerator.

10. The system according to claim 7, wherein, the feedwater pipeline comprises a feedwater main pipe (60); a pipeline (70) connected from the deaerator (40) to the feedwater main pipe (60); a feedwater branch pipe (150, 250, 350) connecting the feedwater main pipe (60) and each steam generator (10, 20, 30) and distributing medium in the feedwater main pipe (60) to each steam generator (10, 20, 30); wherein, a main feedwater regulating valve (160, 260, 360) is set on the feedwater branch pipe (150, 250, 350) connected to each steam generator (10, 20, 30), and a main feedwater bypass regulating valve (170, 270, 370) is set on the bypass of the main feedwater regulating valve (160, 260, 360);
the main steam isolation valve (120, 220, 320) and the atmospheric relief valve (130, 230, 330)on upstream of the main steam isolation valve (120, 220, 320) are set on the steam vent branch pipe (110, 210, 310) connected by each steam generator (10, 20, 30), and the main steam bypass valve (140, 240, 340)is set on the bypass of each main steam isolation valve (120, 220, 320).

## Patentansprüche

1. Passives Impulskühlverfahren für ein Kernkraftwerk, das durchgeführt wird, wenn es einen Totalausfall von Speisewasser gibt, oder wenn einen Totalausfall von Speisewasser wegen Leistungsausfallüberlagerung des gesamten Kraftwerkes gibt, wobei das Verfahren die folgenden Schritte umfasst:
einen Dampferzeugertrennschritt : Schließen der atmosphärischen Überdrückventile (130, 230, 330) jedes Dampferzeugers (10, 20, 30);
einen Dampferzeugerfunktionstrennschritt: Auswahl einer Betriebsart gemäß den Bedingungen der Notfallreaktionsstrategie, und Unterteilung aller Dampferzeuger in zwei Teile: elektrisch betriebener Dampferzeuger und Kühldampferzeuger nach der Betriebsart;
einen Kühldampferzeugerdruckablassschritt: Senken von Sollwerten des Überdruckventils des Kühldampferzeugers und Warten auf die Öffnung des Kühldampferzeugers;
einen Speisewasserrohröffnungsschritt: Abisolierung der Speisewasserrohrleitung des Kühldampferzeugers;
**dadurch gekennzeichnet, dass** der Dampferzeugertrennschritt weiter umfasst: Absperren von Dampfrohrleitungen und Speisewasserrohrleitungen zwischen jedem Dampferzeuger (10, 20, 30) und einem Entgaser (40) des sekundären Kreislaufes; die Dampfrohrleitungen umfassen: einen Dampfsammler (50), ein Dampfentlüftungsabzweigrohr (110, 210, 310), das jeden Dampferzeuger (10, 20, 30) mit dem Dampfsammler (50) verbindet; ein Dampfversorgungsabzweigrohr (410) des Entgasers (40), das den Dampfsammler (50) und den Entgaser mit einander verbindet;
und eine Dampfboosterrohrleitung (430), die mit dem Dampfsammler (50) und dem Entgaser (40) verbunden ist und mit einem Druckhaltventil (460) und einem luftbetriebenen Absperrventil (440, 450) ausgestattet ist;
vor dem Speisewasserrohröffnungsschritt, das Verfahren weiter umfasst: einen Erststufe-Entgaserdruckaufbauschritt: Öffnung eines luftbetriebenen Absperrventils (440, 450) auf der Dampfboosterrohrleitung (430), um den Entgaser mit dem übrigen Hochdruckdampf in der Dampfrohrleitung unter Druck zu setzen;
nach dem Speisewasserrohröffnungsschritt, das Verfahren weiter umfasst: einen Zweitstufe-Entgaserdruckaufbauschritt: Abisolierung des Dampfentlüftungsabzweigrohres, das mit dem elektrisch betriebenen Dampferzeuger verbunden ist, zur Druckhaltung der Dampfrohrleitung der konventionellen Insel und zur kontinuierlichen Beaufschlagung des Entgasers (40) mit Druck.

2. Verfahren nach Anspruch 1, wobei das Verfahren alle Dampfrohrleitungen zwischen jedem Dampferzeuger (10, 20, 30) und dem Entgaser (40) auf die folgenden Weisen absperren kann: Schließen von Hauptdampfabsperrventilen (120, 220, 320) auf dem Dampfentlüftungsabzweigrohr (110, 210, 310), das mit jedem Dampferzeuger (10, 20, 30) verbunden ist, und von Hauptdampfbypassventilen (140, 240, 340) auf einem Bypass der Hauptdampfabsperrventile (120, 220, 320); Schließen eines Dampfregelventils (420) des Entgasers (40) auf dem Dampfversorgungsabzweigrohr (410) des Entgasers, und Schließen des luftbetriebenen Absperrventils (440, 450) auf dem Dampfboosterrohrleitung (430);
wobei die Abisolierung des Dampfentlüftungsabzweigrohrs, das mit dem elektrisch betriebenen Dampferzeuger verbunden ist, die Öffnung des Hauptdampfbypassventils auf dem Bypass des Hauptdampfabsperrventils (140, 240, 340) jedes Dampferzeugers (10, 20, 30) umfasst.

3. Verfahren nach Anspruch 1, wobei das Verfahren alle Speisewasserrohrleitungen zwischen den Dampferzeugern (10, 20, 30) und dem Entgaser (40) auf die folgenden Weisen absperren kann: Schließen von Sperrventilen auf Rohrleitungen (70), die den Entgaser (40) mit einem Speisewasserhauptrohr (60) verbinden, Schließen von Hauptspeisewasserregelventilen (160, 260, 360) auf Speisewasserabzweigrohren zwischen den Dampferzeugern (10, 20, 30) und den Speisewasserhauptrohren (60), und Schließen von Hauptspeisewasserbypassregelventilen (170, 270, 370) auf einem Bypass der Hauptspeisewasserregelventilen (160, 260, 360); die Abisolierung der Speisewasserrohrleitung der Kühldampferzeuger die Öffnung der Absperrventilen auf der Rohrleitungen (70), die den Entgaser mit einem Speisewasserhauptrohr (60) verbinden, und die Öffnung des Hauptspeisewasserregelventils (160, 260, 360) auf dem Speisewasserabzweigrohr zwischen dem Speisewasserhauptrohr und dem Kühldampferzeuger und/oder dem Hauptspeisewasserbypassregelventil (170, 270, 370) auf dem Bypass des Hauptspeisewasserregelventils umfasst.

4. Verfahren nach Anspruch 1, wobei der Schritt der Auswahl einer Betriebsart gemäß den Bedingungen der Notfallreaktionsstrategie umfasst:
wenn es den Totalausfall von Speisewasser gibt, Auswahl einer schnellen Notfallbetriebsart;
wenn es den Totalausfall von Speisewasser wegen Leistungsausfallüberlagerung des gesamten Kraftwerkes gibt, Auswahl einer Haltebetriebsart ; wobei die Anzahl von Kühldampferzeugern in der schnellen Notfallbetriebsart größer als diese in der Haltebetriebsart ist.

5. Verfahren nach Anspruch 1, wobei der Schritt der Unterteilung aller Dampferzeuger in elektrisch betriebener Dampferzeuger und Kühldampferzeuger nach der Betriebsart umfasst:
bei der schnellen Notfallbetriebsart werden aus allen drei Dampferzeugern (10, 20, 30) zwei Dampferzeuger als der Kühldampferzeuger benutzt, und wird der übrige als elektrisch betriebener Dampferzeuger benutzt;
bei der Haltebetriebsart wird einer der drei Dampferzeuger (10, 20, 30)als der Kühldampferzeuger benutzt, und werden die übrigen zwei Dampferzeuger als der elektrisch betriebene Dampferzeuger benutzt.

6. Verfahren nach Anspruch 1, wobei das Kühldampferzeugerdruckablassschritt umfasst:
allmähliches Senken der Sollwerte des atmosphärischen Überdruckventils des Kühldampferzeugers zur Erniedrigung des Drucks des Kühldampferzeugers, bis das atmosphärische Überdruckventil des Kühldampferzeugers ganz offen ist.

7. Passives Impulskühlsystem für ein Kernkraftwerk zur Durchführung des Verfahrens nach einem der Ansprüche 1 - 6, wobei das System eine Vielzahl von Dampferzeugern (10, 20, 30), **dadurch gekennzeichnet, dass** das System weiter einen Entgaser (40) des sekundären Kreislaufes, Dampfrohrleitungen und Speisewasserrohrleitungen umfasst, die zwischen einer Vielzahl von Dampferzeugern (10, 20, 30) und dem Entgaser (40) verbunden sind, wobei die Dampfrohrleitungen umfassen: einen Dampfsammler (50), ein Dampfentlüftungsabzweigrohr (110, 210, 310), das jeden Dampferzeuger (10, 20, 30) mit dem Dampfsammler (50) verbindet; ein Dampfversorgungsabzweigrohr (410) des Entgasers (40), das den Dampfsammler (50) und den Entgaser (40) mit einander verbindet; und eine Dampfboosterrohrleitung (430), die mit dem Dampfsammler (50) und dem Entgaser (40) verbunden ist, und mit einem Druckhaltventil (460) und einem luftbetriebenen Absperrventil (440, 450) ausgestattet ist.

8. System nach Anspruch 7, wobei die zwei luftbetriebenen Absperrventile und das Druckhalteventil zwischen den zwei luftbetriebenen Absperrventilen auf der Dampfboosterrohrleitung (460) angeordnet sind.

9. System nach Anspruch 7, wobei ein Ende der Dampfboosterrohrleitung (430) mit dem Dampfsammler (50) verbunden ist; das andere Ende mit einer Schnittstelle verbunden ist, die unmittelbar mit einem Luftraum des Entgasers (40) verbunden ist, oder mit einer nachgeschalteten Position des Dampfregelventils (420) des Entgasers des Dampfversorgungsrohrs (410) des Entgasers verbunden ist, oder mit einer Wassereinlassrohrleitung (470) des Entgasers verbunden ist.

10. System nach Anspruch 7, wobei die Speisewasserrohrleitung ein Speisewasserhauptrohr (60), eine Rohrleitung (70), die den Entgaser (40) mit dem Speisewasserhauptrohr verbindet, ein Speisewasserabzweigrohr (150, 250, 350), das das Speisewasserhauptrohr (60) mit jedem Dampferzeuger (10, 20, 30) verbindet und Medium in das Speisewasserhauptrohr (60) zu jedem Dampferzeuger (10, 20, 30) verteilt; wobei ein Speisewasserhauptregelventil (160, 260, 360) auf dem mit jedem Dampferzeuger (10, 20, 30) verbundenen Speisewasserabzweigrohr (150, 250, 350) angeordnet ist, und ein Speisewasserhauptbypassregelventil (170, 270, 370) auf dem Bypass des Speisewasserhauptregelventils (160, 260, 360) angeordnet ist; das Hauptdampfabsperrventil (120, 220, 320) und das dem Hauptdampfabsperrventil (120, 220, 320) vorgeschalteten atmosphärische Überdruckventil (130, 230, 330), auf dem mit jedem Dampferzeuger verbundenen Dampfentlüftungsabzweigrohr (110, 210, 310) angeordnet sind, und das Hauptdampfbypassrventil (140, 240, 340) auf jedem Hauptdampfabsperrventil (120, 220, 320) angeordnet ist.

## Revendications

1. Procédé de refroidissement passif par impulsions pour centrale nucléaire, réalisé lorsqu'une perte totale d'eau alimentaire ou une perte totale d'eau alimentaire due à la superposition d'une perte de puissance de l'ensemble de la centrale se produit, le procédé comprenant les étapes suivantes :
une étape d'isolement des générateurs de vapeur : fermeture des soupapes de sûreté atmosphériques (130, 230, 330) de chaque générateur de vapeur (10, 20, 30) ;
une étape de séparation de fonction de générateurs de vapeur : sélectionner un mode opérationnel selon les exigences de la stratégie d'intervention en cas d'urgence, et répartir tous les générateurs de vapeur en deux parties : générateur de vapeur à commande électrique et générateur de vapeur de refroidissement selon le mode opérationnel ;
une étape de réduction de la pression du générateur de vapeur de refroidissement :
diminution des points de consigne de la soupape de sûreté du générateur de vapeur de refroidissement et attendre l'ouverture de la soupape de sûreté atmosphérique du générateur de vapeur de refroidissement ;
une étape d'ouverture de la tuyauterie d'eau alimentaire : désisolement de la tuyauterie d'eau alimentaire du générateur de vapeur de refroidissement ;
**caractérisé en ce que** l'étape d'isolement des générateurs de vapeur comprend en outre : l'isolement des tuyauteries de vapeur et des tuyauteries d'eau alimentaire entre chaque générateur (10, 20, 30) et un dégazeur (40) du circuit secondaire ; les tuyauteries de vapeur comprennent : un collecteur de vapeur (50) ; une conduite de dérivation avec évent de vapeur (110, 210, 310) raccordant chaque générateur de vapeur (10, 20, 30) au collecteur de vapeur (50) ; une conduite de dérivation d'alimentation en vapeur (410) du dégazeur (40) raccordant le collecteur de vapeur (50) et le dégazeur (40); et une tuyauterie d'augmentation de vapeur (430) se raccordant au collecteur de vapeur (50) et
au dégazeur (40) et pourvue d'une vanne de mise sous pression (460) et d'une vanne d'isolement à commande pneumatique (440, 450) ;
en amont de l'étape d'ouverture de la tuyauterie d'eau alimentaire, le procédé comprend en outre : une étape de mise sous pression en première phase du dégazeur : ouverture d'une vanne d'isolement à commande pneumatique (440, 450) sur la tuyauterie d'augmentation de vapeur (430) de façon à mettre le dégazeur (40) sous pression au moyen de la vapeur résiduelle à haute pression dans la tuyauterie de vapeur;
en aval de l'étape d'ouverture de la tuyauterie d'eau alimentaire, le procédé comprend en outre une étape de mise sous pression en deuxième phase du dégazeur : désisole ment de la conduite de dérivation avec évent de vapeur (110, 210, 310) raccordée au générateur de vapeur à commande électrique afin de maintenir une pression de ligne de vapeur de l'île conventionnelle et de mettre sous une pression continue le dégazeur (40).

2. Procédé selon la revendication 1, dans lequel le procédé peut isoler toutes les tuyauteries de vapeur entre chaque générateur de vapeur (10, 20, 30) et le dégazeur (40) des façons suivantes : fermeture des vannes principales d'isolement de vapeur (120, 220, 320) sur la conduite de dérivation avec évent de vapeur (110, 210, 310) raccordées à chaque générateur de vapeur et des vannes principales de bypass sur le bypass des vannes principales d'isolement de vapeur (120, 220, 320) ; fermeture d'une vanne de régulation de vapeur (420) du dégazeur sur la conduite de dérivation d'alimentation en vapeur (410), et fermeture la vanne d'isolement à commande pneumatique (440, 450), sur la tuyauterie d'augmentation de vapeur (430) ;
le désisolement de la conduite de dérivation avec évent de vapeur raccordée au générateur de vapeur à commande électrique comprend l'ouverture de la vanne principale de bypass de vapeur sur le bypass de la vanne principale d'isolement de vapeur (140, 240, 340) de chaque générateur de vapeur (10, 20, 30).

3. Procédé selon la revendication 1, dans lequel le procédé peut isoler toute les tuyauteries d'eau alimentaire comprises entre les générateurs de vapeur (10, 20, 30) et le dégazeur (40) des façons suivantes : fermeture des vannes d'isolement sur des tuyauteries (70) raccordant le dégazeur (40) à une conduite principale d'eau alimentaire (60), fermeture de vannes principales de régulation d'eau alimentaire (160, 260, 360) sur des conduites de dérivation d'eau alimentaire comprises entre les générateurs de vapeur (10, 20, 30) et les conduites principales d'eau alimentaire (60), et fermeture de vannes principales de régulation de bypass sur le bypass des vannes principales de régulation d'eau alimentaire (160, 260, 360) ;
le déisolement de la tuyauterie d'eau alimentaire du générateur de vapeur de refroidissement comporte l'ouverture des vannes d'isolement sur les tuyauteries (70) raccordant le dégazeur (40) à la conduite principale d'eau alimentaire (60), et l'ouverture de la vanne principale de régulation d'eau alimentaire (160, 260, 360) sur la conduite de dérivation d'eau alimentaire comprise entre la conduite principale d'eau alimentaire et le générateur de vapeur de refroidissement et/ou de la vanne principale de bypass d'eau alimentaire (170, 270, 370) sur le bypass de la vanne principale de régulation d'eau alimentaire (160, 260, 360).

4. Procédé selon la revendication 1, dans lequel la sélection des modes opératoires selon les exigences de la stratégie d'intervention en cas d'urgence comporte :
si la perte totale d'eau alimentaire se produit, sélectionner un mode de secours rapide ;
si la perte totale due à une superposition de perte de puissance de la totalité de la centrale a lieu, sélectionner un mode de maintien ;
le nombre de générateurs de vapeur de refroidissement dans le mode de secours rapide étant supérieur à celui dans le mode de maintien.

5. Procédé selon la revendication 1, dans lequel la répartition de tous les générateurs de vapeur en générateurs de vapeur à commande électrique et en générateurs de vapeur de refroidissement selon le mode opératoire comporte ce qui suit :
dans le mode de secours rapide, de l'ensemble des trois générateurs de vapeur (10, 20, 30) deux générateurs de vapeur sont utilisés comme générateurs de refroidissement, et le générateur restant est utilisé en tant que générateur de vapeur à commande électrique ;
dans le mode de maintien, l'un des trois générateurs de vapeur est utilisé comme générateur de vapeur de refroidissement, et les deux générateurs de vapeur restants sont utilisés comme générateur de vapeur à commande électrique.

6. Procédé selon la revendication 1, dans lequel l'étape de réduction de la pression du générateur de vapeur de refroidissement comporte : diminuer graduellement les points de consigne de la soupape de sûreté atmosphérique du générateur de vapeur de refroidissement afin de réduire la pression du générateur de vapeur de refroidissement jusqu'à ce que la soupape de sûreté atmosphérique du générateur de vapeur de refroidissement soit complètement ouverte.

7. Système de refroidissement passif par impulsions pour centrale nucléaire, apte à réaliser le procédé selon l'une quelconque des revendications 1 à 6, le système comportant une pluralité de générateurs de vapeur (10, 20, 30), **caractérisé en ce que** le système comporte en outre un dégazeur (40) du circuit secondaire, des tuyauteries de vapeur et des tuyauteries d'eau alimentaire raccordées entre la pluralité de générateurs de vapeur (10, 20, 30) et le dégazeur (40), où les tuyauteries de vapeur comprennent : un collecteur de vapeur (50), une conduite de dérivation avec évent de vapeur (110, 210, 310) raccordant chaque générateur de vapeur (10, 20, 30) au collecteur de vapeur (50), une conduite de dérivation d'alimentation en vapeur (410) du dégazeur (40) raccordant le collecteur de vapeur (50) et le dégazeur (40); et une tuyauterie d'augmentation de vapeur (430) se raccordant au collecteur de vapeur (50) et au dégazeur (40) et pourvue d'une vanne de mise sous pression (460) et d'une vanne d'isolement à commande pneumatique (440, 450).

8. Système selon la revendication 7, dans lequel les deux vannes d'isolement à commande pneumatique et la vanne de mise sous pression comprise entre les vannes d'isolement à commande pneumatique (440, 450) sont disposées sur la tuyauterie d'augmentation de vapeur (460).

9. Système selon la revendication 7, dans lequel une extrémité de la tuyauterie d'augmentation de vapeur (430) est raccordée au collecteur de vapeur (50); l'autre extrémité est raccordée à une interface directement raccordée à une espace d'air du dégazeur (40), ou est raccordée à une position en aval de la vanne de régulation de vapeur (420) du dégazeur de la conduite de dérivation d'alimentation en vapeur (410) du dégazeur (40), ou est raccordée à une tuyauterie d'admission d'eau (470) du dégazeur.

10. Système selon la revendication 7, dans lequel la tuyauterie d'eau alimentaire comprend une conduite principale d'eau alimentaire (60), une conduite (70) raccordant le dégazeur (40) à la conduite principale d'eau alimentaire (60), une tuyauterie de dérivation d'eau alimentaire (150, 250, 350) raccordant la conduite principale d'eau alimentaire (60) et chaque générateur de vapeur (10, 20, 30) et distribuant du milieu dans la conduite principale d'eau alimentaire à chaque générateur de vapeur (10, 20, 30), où une vanne une vanne principale de régulation d'eau alimentaire (160, 260, 360) est placée sur la conduite de dérivation d'eau alimentaire (150, 250, 350) raccordée à chaque générateur de vapeur (10, 20, 30), et une vanne principale de régulation de bypass d'eau alimentaire (170, 270, 370) est placée sur le bypass de la vanne principale de régulation d'eau alimentaire (160, 260, 360) ; la vanne principale d'isolement de vapeur (120, 220, 320) et la soupape de sûreté atmosphérique (130, 230, 330) en amont de la vanne principale d'isolement de vapeur (110, 210, 310) sont placées sur la conduite de dérivation avec évent de vapeur (110, 210, 310) raccordée à chaque générateur de vapeur (10, 20, 30), et la vanne principale de bypass de vapeur (140, 240, 340) est placée sur le bypass de chaque vanne principale d'isolement de vapeur (120, 220, 320).
